# EUROPÄISCHE PATENTSCHRIFT

(11) **EP 2 592 849 B1**
(45) Veröffentlichungstag und Bekanntmachung des Hinweises auf die Patenterteilung: **02.01.2019**
(21) Anmeldenummer: 12189980.1
(22) Anmeldetag: 25.10.2012
(51) Int. Cl.: H04R 25/00, H01M 2/10

(54) **Hörvorrichtung mit einem Batteriefach**
Hearing aid with a battery compartment
Prothèse auditive avec un compartiment pour batterie

(30) Priorität: 08.11.2011 DE 102011085928
(43) Veröffentlichungstag der Anmeldung: 15.05.2013
(73) Patentinhaber: Sivantos Pte. Ltd., Singapore 539775 (SG)
(72) Erfinder: Birkmann, Christoph, 91560 Heilsbronn (DE); Breindl, Klaus, 90427 Nürnberg (DE); Goly, Volker, 91056 Erlangen (DE); Sauer, Joseph, 96129 Strullendorf (DE); Zenk, Friedrich, 91334 Hemhofen (DE)
(74) Vertreter: FDST Patentanwälte

(56) Entgegenhaltungen:
- US-A- 4 436 792

## Beschreibung

Die Erfindung betrifft eine Hörvorrichtung mit einem Batteriefach, in welches eine Batterie entlang einer Einführungsrichtung einführbar und in welchem ein zum elektrischen Kontaktieren der Batterie ausgelegtes Kontaktelement angeordnet ist. Unter dem Begriff Hörvorrichtung wird hier insbesondere ein Hörgerät verstanden. Darüber hinaus fallen unter den Begriff aber auch andere tragbare und nicht tragbare akustische Geräte wie Headsets, Kopfhörer und dergleichen.

Hörgeräte sind tragbare Hörvorrichtungen, die zur Versorgung von Schwerhörenden dienen. Um den zahlreichen individuellen Bedürfnissen entgegenzukommen, werden unterschiedliche Bauformen von Hörgeräten wie Hinter-dem-Ohr-Hörgeräte (HdO), Hörgerät mit externem Hörer (RIC: receiver in the canal) und In-dem-Ohr-Hörgeräte (IdO), z.B. auch Concha-Hörgeräte oder Kanal-Hörgeräte (ITE, CIC), bereitgestellt. Die beispielhaft aufgeführten Hörgeräte werden am Außenohr oder im Gehörgang getragen. Darüber hinaus stehen auf dem Markt aber auch Knochenleitungshörhilfen, implantierbare oder vibrotaktile Hörhilfen zur Verfügung. Dabei erfolgt die Stimulation des geschädigten Gehörs entweder mechanisch oder elektrisch.

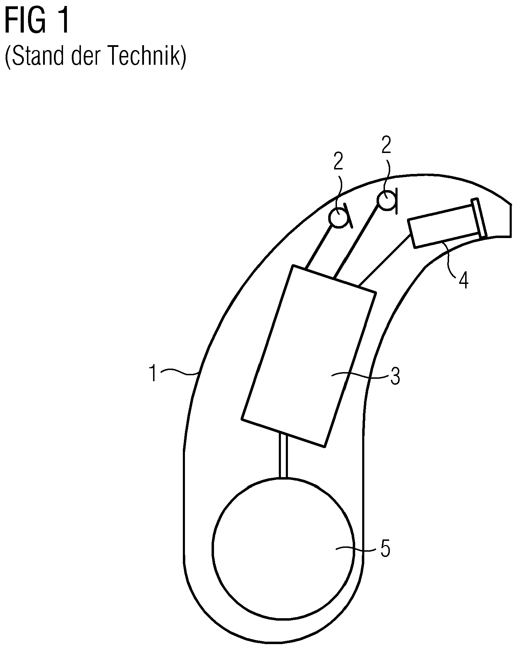

Hörgeräte besitzen prinzipiell als wesentliche Komponenten einen Eingangswandler, einen Verstärker und einen Ausgangswandler. Der Eingangswandler ist in der Regel ein Schallempfänger, z. B. ein Mikrofon, und/oder ein elektromagnetischer Empfänger, z. B. eine Induktionsspule. Der Ausgangswandler ist meist als elektroakustischer Wandler, z. B. Miniaturlautsprecher, oder als elektromechanischer Wandler, z. B. Knochenleitungshörer, realisiert. Der Verstärker ist üblicherweise in eine Signalverarbeitungseinheit integriert. Dieser prinzipielle Aufbau ist in FIG 1 am Beispiel eines Hinter-dem-Ohr-Hörgeräts dargestellt. In ein Hörgerätegehäuse 1 zum Tragen hinter dem Ohr sind ein oder mehrere Mikrofone 2 zur Aufnahme des Schalls aus der Umgebung eingebaut. Eine Signalverarbeitungseinheit 3, die ebenfalls in das Hörgerätegehäuse 1 integriert ist, verarbeitet die Mikrofonsignale und verstärkt sie. Das Ausgangssignal der Signalverarbeitungseinheit 3 wird an einen Lautsprecher bzw. Hörer 4 übertragen, der ein akustisches Signal ausgibt. Der Schall wird gegebenenfalls über einen Schallschlauch, der mit einer Otoplastik im Gehörgang fixiert ist, zum Trommelfell des Geräteträgers übertragen. Die Energieversorgung des Hörgeräts und insbesondere die der Signalverarbeitungseinheit 3 erfolgt durch eine ebenfalls ins Hörgerätegehäuse 1 integrierte Batterie 5.

Zum Lagern der Batterie 5 in dem Hörgerätegehäuse 1 kann dieses ein Batteriefach aufweisen, in welches sich die Batterie 5 einführen lässt. Um zwischen einer in dem Batteriefach eingeführten Batterie 5 und der Elektronik des Hörgeräts einen elektrischen Kontakt herzustellen, können in dem Batteriefach entsprechende Kontaktelemente für die beiden Pole der Batterie bereitgestellt sein. Um einen Wackelkontakt zu verhindern, wie er sich beispielsweise ergeben kann, wenn das Hörgerät geschüttelt wird, sollten die Kontaktelemente fest an der Oberfläche der Batteriepole anliegen. Hierzu kann vorgesehen sein, die Kontaktelemente mithilfe eines Federmechanismus gegen die Batterie zu drücken. Problematisch bei dieser Form der Kontaktierung ist allerdings, dass sich die Federelemente nach Entnehmen der Batterie aus dem Batteriefach entspannen und hierdurch die Kontaktelemente zumindest ein Stück weit in den zuvor von der Batterie eingenommenen Raum hineinragen. Wird nun eine neue Batterie in das Batteriefach eingeschoben, kann ein in das Batteriefach ragendes Kontaktelement einen Kurzschluss zwischen den beiden Polen der Batterie verursachen, wenn es so weit in das Batteriefach hineinragt, dass es beim Einschieben von beiden Polen zugleich berührt wird.

Um dies zu verhindern, kann vorgesehen sein, die Batterie nicht direkt in das Batteriefach einzuschieben, sondern einen aus dem Batteriefach herausschwenkbarer Träger vorzusehen, in welchen sich die Batterie einlegen und der sich dann mit eingelegter Batterie in das Batteriefach einschwenken lässt. Dieser Träger kann dann eine Abschirmung aufweisen, welche verhindert, dass die Kontaktelemente die Batterie beim Einschwenken des Trägers berühren. Erst wenn sich die Batterie in ihrer Ruhelage im Batteriefach befindet, sind auch die Kontaktelemente in Anlage mit der Batterie. Aus US 4,436,792 ist beispielsweise auch bekannt, die Kontaktelemente nach Art einer Wippe kippbar auszubilden, wobei an einem Ende ein Kontaktabschnitt zur Kontaktierung der Batterie und am entgegengesetzten Ende des Kontaktelements ein Hebelabschnitt angeordnet sind. Beim Einschieben der Batterie drückt diese auf den in Einschubrichtung im Endbereich des Batteriefachs angeordneten Hebelabschnitt, wodurch der entgegen der Einschubrichtung dem Hebelabschnitt gegenüberliegende Kontaktabschnitt an die korrespondierende Kontaktfläche der Batterie angeschwenkt wird. Der jeweilige Kontaktabschnitt ist somit auch erst mit der Batterie in Anlage, wenn sich diese in ihrer Ruhelage befindet.

Aufgabe der vorliegenden Erfindung ist es, für eine Hörvorrichtung eine einfach herzustellende Kontaktiereinrichtung für eine Batterie bereitzustellen.

Die Aufgabe wird durch eine Hörvorrichtung gemäß Patentanspruch 1 gelöst. Vorteilhafte Weiterbildungen der erfindungsgemäßen Hörvorrichtung sind durch die Unteransprüche gegeben.

Bei der erfindungsgemäßen Hörvorrichtung ist ein Batteriefach vorgesehen, in welches eine Batterie entlang einer Einführrichtung einführbar ist. In dem Batteriefach befindet sich ein Kontaktelement, welches zum elektrischen Kontaktieren der Batterie ausgelegt ist. Das Kontaktelement ist derart ausgestaltet und in dem Batteriefach angeordnet, dass es bei leerem Batteriefach eine Ruhelage aufweist, in welcher ein Kontaktbereich des Kontaktelements in den von der Batterie einzunehmenden Raum hineinragt. Dorthin wird der Kontaktbereich durch eine Federkraft gehalten.

Beim Einführen der Batterie in das Batteriefach wird der Kontaktbereich gegen die Federkraft ausgelenkt. Bei vollständig eingeführter Batterie drückt der Kontaktbereich deshalb gegen die Batterie, so dass er einen zuverlässigen elektrischen Kontakt herstellt.

Um nun zu verhindern, dass während des Einschiebens ein Kurzschluss zwischen den zwei Polen der Batterie durch das Kontaktelement verursacht wird, umfasst das Kontaktelement bei der erfindungsgemäßen Hörvorrichtung eine aus einem elektrisch isolierenden Material gebildete Anlageeinrichtung, etwa eine kleine Kunststoffplatte. Diese weist eine bezüglich der Einführrichtung schräg angeordnete Oberfläche auf, an welcher die Batterie während des Einführens beim Auslenken des Kontaktbereichs anliegt. Mit anderen Worten gleitet die Batterie an der schrägen Oberfläche entlang. Hierbei wird die von der Batterie auf die schräge Oberfläche ausgeübte Kraft aufgrund der Schräge derart umgelenkt, dass ein Teil der Kraft der Federkraft entgegenwirkt und so den Kontaktbereich in der beschriebenen Weise aus seiner Ruhelage auslenkt.

Die erfindungsgemäße Hörvorrichtung weist den Vorteil auf, dass durch die besondere Ausgestaltung und Anordnung des Kontaktelements selbst verhindert wird, dass sich beim Einführen und auch beim Entnehmen der Batterie ein Kurzschluss ereignet. Eine aufwendige Abschirmung an einem verschwenkbaren Träger ist nun nicht mehr nötig.

In einigen Fällen ist es zweckmäßig, wenn derjenige Teil des Kontaktelements möglichst klein ist, der in den Raum hineinragt, der in dem Batteriefach von der Batterie einzunehmenden ist. Andernfalls besteht das Risiko, dass das Kontaktelement oder eine Befestigungseinrichtung, mittels welcher das Kontaktelement in dem Batteriefach gehalten wird, beschädigt wird, wenn der Benutzer die Batterie beispielsweise zu fest in das Fach hineindrückt. Entsprechend sieht eine Ausführungsform der erfindungsgemäßen Hörvorrichtung vor, dass das Kontaktelement einen gekröpften Bereich aufweist, welcher die Anlageeinrichtung, also z.B. die Platte, und/oder den Kontaktbereich aufweist. Eine Kröpfung ist auch bei den in der Regel verhältnismäßig filigranen Kontaktelementen einer Hörvorrichtung einfach und kostengünstig herstellbar und erlaubt es dabei dennoch, einen weit in den von der Batterie einzunehmenden Raum hineinragenden Kontaktbereich und, falls gewünscht, auch eine schräge Oberfläche zum Ausbilden der Anlageeinrichtung bereitzustellen.

Im Zusammenhang mit der Ausgestaltung der Anlageeinrichtung hat sich herausgestellt, dass an selbige hohe mechanische Anforderungen gestellt werden. Durch häufiges Auswechseln der Batterie einer Hörvorrichtung kommt es zu einem Abrieb des elektrisch isolierenden Materials der Anlageeinrichtung, was wiederum in einem Kurzschluss enden kann. Im Folgenden sind hierzu Ausführungsformen der erfindungsgemäßen Hörvorrichtung beschrieben, welche sich im Zusammenhang mit den mechanischen Anforderungen als besonders robust erwiesen haben.

So weist eine Ausführungsform der erfindungsgemäßen Hörvorrichtung eine Anlageeinrichtung auf, welche eine Platte umfasst, die an einem elektrischen Leitelement des Kontaktelements, etwa einem Kontaktarm aus Metall, befestigt ist. Eine solche Platte lässt sich einfach und zuverlässig an dem elektrischen Leitelement befestigen und derart dick auslegen dimensionieren, dass es für die voraussichtliche Lebensdauer der Hörvorrichtung trotz Abriebs nicht zu einem Kurzschluss kommt.

Die Anlageeinrichtung kann auch einen Lack umfassen, welcher auf einer bezüglich der Einführrichtung schräg angeordneten Oberfläche eines elektrisch leitenden Bereichs des Kontaktelements angeordnet ist. Die Verwendung von Lack weist hierbei den Vorteil auf, dass sich mit ihm eine Anlageeinrichtung an einem beliebig geformten Kontaktelement bereitstellen lässt, da der Lack flüssig aufgetragen werden kann.

Um sich ein Ankleben oder ähnliche Befestigungsschritte zu ersparen, kann die Anlageeinrichtung, oder ein Teil derselben, auch gebildet werden, indem ein Abschnitt des Kontaktelements mit dem elektrisch isolierenden Material umspritzt wird. Hierdurch ergibt sich dann von selbst ein Formschluss zwischen der Anlageeinrichtung und dem diese tragenden Abschnitt des Kontaktelements.

Um die Anlageeinrichtung getrennt von dem elektrisch leitenden Teil des Kontaktelements fertigen zu können, kann die Anlageeinrichtung auch eine Kappe umfassen, welche dann im Verlauf der Fertigung auf ein elektrische Leitelement des Kontaktelements aufgesetzt wird.

Um von der Form der elektrisch leitenden Teile des Kontaktelements unabhängig zu sein, kann auch vorgesehen sein, dass die Anlageeinrichtung einen aus dem elektrisch isolierenden Material gebildeten Körper umfasst, welcher einen keilförmigen Bereich aufweist. Die bezüglich der Einführrichtung schräg angeordnete Oberfläche zum Umlenken der Einschubkraft ist dann Bestandteil dieses keilförmigen Bereichs.

Die Federkraft, mittels welcher der Kontaktbereich gegen die Batterie gedrückt wird, lässt sich gemäß einer besonders einfach herzustellenden Ausführungsform der erfindungsgemäßen Hörvorrichtung dadurch erzeugen, dass zumindest ein Teil des Kontaktelements als Blattfeder ausgestaltet ist.

Das elektrisch isolierende Material zum Bilden der Anlageeinrichtung kann, wie bereits beschrieben, ein Lack sein. Auch andere Polymere sind geeignet. Es ist auch möglich, eine Oberfläche eines Metalls des Kontaktelements zu oxidieren und hierdurch eine elektrisch isolierende Oxidschicht zu bilden. Neben der elektrisch isolierenden Eigenschaften ist es aber je nach dem, wie schräg die Oberfläche bezüglich der Einführrichtung angeordnet ist, auch notwendig, dass die Batterie mit einer möglichst geringen Reibung an der Oberfläche entlang gleiten kann, während sie in das Batteriefach gleitet.

In diesem Zusammenhang hat sich als besonders zweckmäßiges elektrisch isolierendes Material Polyoxymethylen (POM) erwiesen. Es weist eine hohe Steifigkeit auf und ermöglicht es dennoch, eine Oberfläche mit einem geringen Reibwert auszubilden.

Die Erfindung wird im Folgenden anhand von Ausführungsbeispielen näher erläutert. Dazu zeigt:
- FIG 1: eine schematische Darstellung eines Aufbaus eines Hinter-dem-Ohr-Hörgeräts;
- FIG 2: eine schematische Darstellung eines Batteriefachs einer Ausführungsform der erfindungsgemäßen Hörvorrichtung während eines Einführens einer Batterie,
- FIG 3: die Hörvorrichtung von FIG 2 mit vollständig in das Batteriefach eingeführter Batterie,
- FIG 4: eine schematische Darstellung einer perspektivischen Ansicht eines Kontaktelements gemäß einer weiteren Ausführungsform der erfindungsgemäßen Hörvorrichtung,
- FIG 5: eine schematische Darstellung eines Kontaktelements gemäß einer weiteren Ausführungsform der erfindungsgemäßen Hörvorrichtung und
- FIG 6: eine schematische Darstellung einer perspektivischen Schnittansicht eines Batteriefachs einer weiteren Ausführungsform der erfindungsgemäßen Hörvorrichtung.

Die Beispiele stellen bevorzugte Ausführungsformen der Erfindung dar.

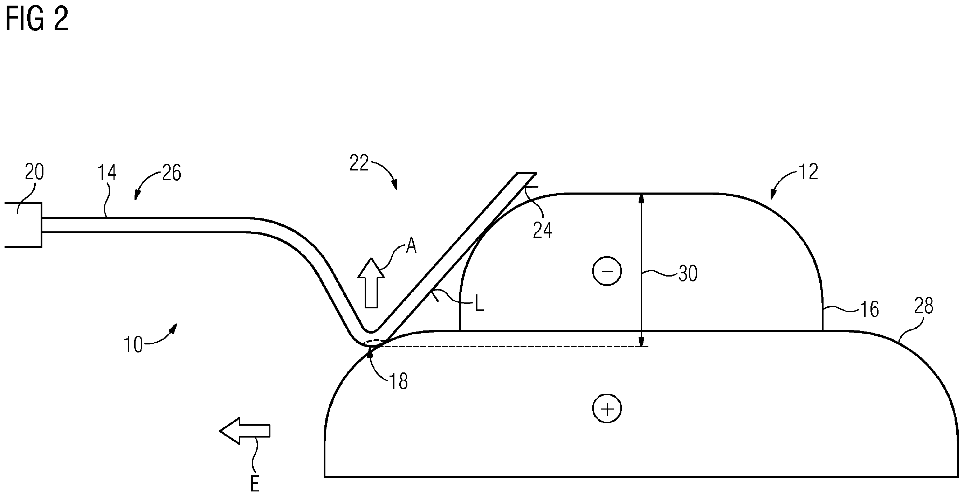

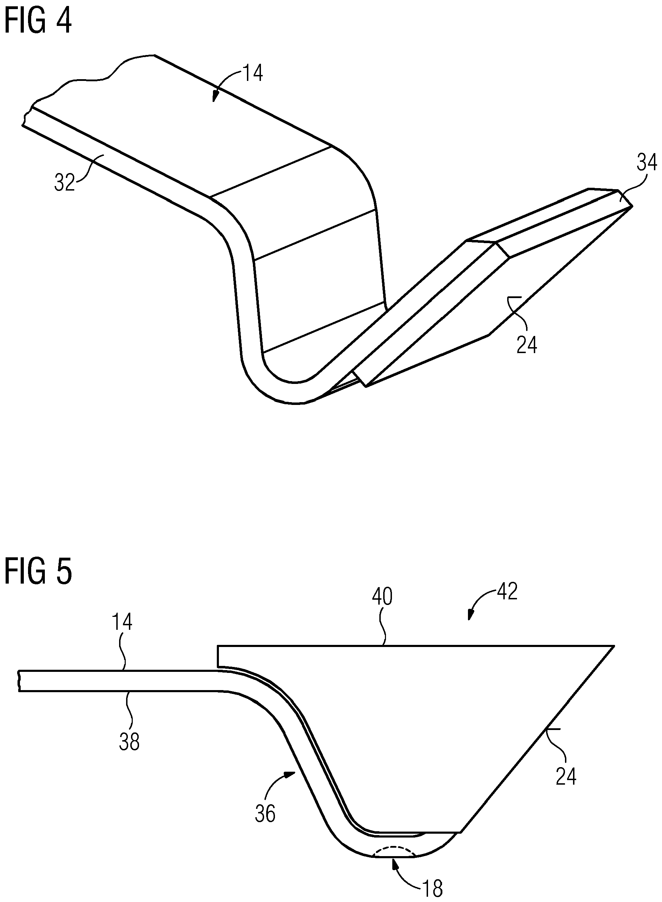

In FIG 2 ist ein Batteriefach 10 gezeigt, in welches eine Batterie 12 entlang einer Einschubrichtung E hineingeschoben wird. Das Batteriefach 10 kann beispielsweise Bestandteil eines Hinter-dem-Ohr-Hörgeräts oder eines In-dem-Ohr-Hörgeräts sein. Bei der Batterie 12 kann es sich beispielsweise um eine Knopfzelle handeln. In einen Hohlraum des Batteriefachs 10, in welchem die Batterie 12 gelagert werden soll, ragt ein Kontaktelement 14. Das Kontaktelement 14 bildet einen Kontaktarm, über welchen ein Strom von einem Minus-Pol 16 der Batterie 12 abgegriffen werden kann, wenn die Batterie 12 vollständig in das Batteriefach 10 eingeschoben ist. Zum Abgreifen des Stromes von dem Minus-Pol 16 weist das Kontaktelement 14 einen elektrisch leitenden Kontaktbereich 18 auf. Das Kontaktelement 14 wird von einer Lagereinrichtung 20 an einer (nicht dargestellten) Wandung eines Hörgerätegehäuses des Hörgeräts gehalten. Das Kontaktelement 14 ist aus einer metallischen Blattfeder gebildet. Die Blattfeder ist in der Figur in einer Seitenansicht gezeigt, in welcher ihre Dicke und ihre Längserstreckung erkennbar ist. Eine Breite der Blattfeder, das heißt eine Erstreckung der Blattfeder in Richtung senkrecht zur Zeichenebene, ist größer als die in der Figur erkennbare Dicke (vergleiche hierzu die perspektivische Darstellung von FIG 4).

Die Blattfeder des Kontaktelements 14 weist an einem Ende einen gekröpften Bereich 22 auf. Unter einem gekröpften Abschnitt ist hierbei ein U- oder V-förmig gebogener Abschnitt der Blattfeder zu verstehen. Der Kontaktbereich 18 befindet sich an einer Spitze des gekröpften Bereichs 22, welche in den von der Batterie 12 einzunehmenden Raum des Batteriefachs 10 hineinragt.

In dem gekröpften Bereich 22 weist das Kontaktelement 14 eine bezüglich der Einschubrichtung E schräg ausgerichteten Anlagefläche 24 auf. Die Anlagefläche 24 ist mit einem elektrisch isolierenden Lack L beschichtet. Der gekröpfte Bereich 22 lässt sich aus der in FIG 2 gezeigten Ruhelage, welche er bei leerem Batteriefach einnimmt, nach in FIG 2 oben hin auslenken. Hierbei wird ein federnder Abschnitt 26 des Kontaktelements gekrümmt.

Die Lackschicht des Oberflächenbereichs 24, d.h. der Lack L, bildet eine Anlageeinrichtung, an deren schräger Oberfläche die Batterie beim Auslenken des Kontaktbereichs 18 entlang gleitet. Beim Einschieben der Batterie 12 in das Batteriefach entlang der Einschubrichtung E berührt der Kontaktbereich 18 einen Plus-Pol 28 der Batterie 12. Gleichzeitig liegt der Minus-Pol 16 an der Anlagefläche 24 an. Durch den Lack L ist die Anlagefläche 24 elektrisch isoliert, so dass sich hierbei kein Kurzschluss an der Batterie 12 ergibt.

Ein Benutzer des Hörgeräts übt während des Einschiebens der Batterie 12 eine Einschubkraft auf die Batterie 12 in die Einschubrichtung E aus. Ein Teil der Einschubkraft wird durch die Schräge der Anlagefläche 24 nach in FIG 2 oben hin umgelenkt. Die sich so ergebende Auslenkkraft A lenkt den Kontaktbereich 18 aus und krümmt hierbei den federnden Bereich 26. Die Batterie 12 gleitet auf diese Weise unter dem gekröpften Bereich 22 hinweg in das Batteriefach 10 hinein. Insgesamt wird dadurch der Kontaktbereich 18 um einen Auslenkweg 30 in dem Batteriefach 10 ausgelenkt. Hierdurch ergibt sich eine entsprechende Rückstellkraft des federnden Bereichs 26, welche entgegen der Auslenkkraft A wirkt.

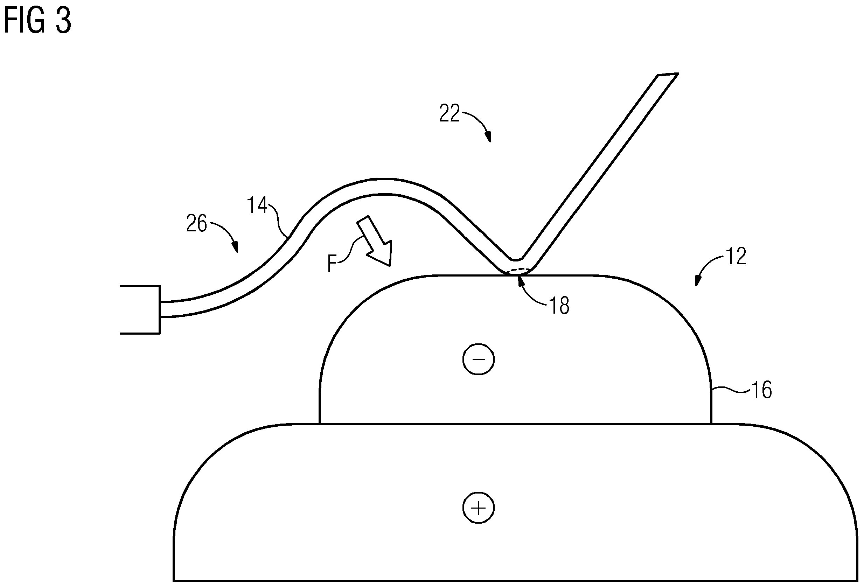

In FIG 3 ist die Batterie 12 im vollständig eingeschobenen Zustand dargestellt. Durch den federnden Bereich 26 wird der gekröpfte Bereich 22 des Kontaktelements 14 und damit der Kontaktbereich 18 mit einer Rückstellkraft F gegen den Minus-Pol 16 der Batterie 12 gedrückt. Hierdurch ergibt sich ein zuverlässiger elektrischer Kontakt zwischen dem Kontaktbereich 18 und dem Minuspol 16.

Um den Lack auf die Anlagefläche 24 aufzutragen, kann der Lack aufgesprüht oder aufgepinselt worden sein. Es kann auch vorgesehen sein, den zu lackierenden Bereich des gekröpften Bereichs 22 in den Lack einzutauchen.

Im Folgenden sind anhand von FIG 4 bis FIG 6 weitere Möglichkeiten beschrieben, um an einem Kontaktelement einen bezüglich einer Einschubrichtung einer Batterie schräg angeordneten Oberflächenbereich eines elektrisch isolierenden Anlageelements bereitzustellen. In FIG 4 bis FIG 6 sind dabei Elemente, die in ihrer Funktionsweise in FIG 2 und FIG 3 gezeigten Elementen entsprechen, mit denselben Bezugszeichen wie in FIG 2 beziehungsweise FIG 3 versehen.

In FIG 4 ist ein Kontaktelement 14 gezeigt, bei dem an einem gekröpften Bereich 22 einer Blattfeder 32 eine Platte 34 befestigt ist. Die Platte 34 ist aus einem elektrisch isolierenden Material, beispielsweise POM, hergestellt. Die Platte 34 kann beispielsweise an die Blattfeder 32 angeklebt sein. Durch die Platte 34 ist ebenfalls eine isolierende Anlagefläche 24 bereitgestellt, welcher beim Einschieben einer Batterie einen Kurzschluss verhindert.

In FIG 5 ist ein Kontaktelement 14 gezeigt, bei dem ein abgeknicktes Ende 36 einer Blattfeder 38 in einem Kontaktbereich 18 endet. An dem abgeknickten Ende 36 der Blattfeder 38 ist ein Block 40 aus einem elektrisch isolierenden Material befestigt. Der Block 40 weist einen keilförmigen Bereich 42 auf, dessen eine Keilfläche eine schräg zu einer Einführungsrichtung einer Batterie angeordnete Anlagefläche 24 bildet. Der Block 40 kann an die Blattfeder 38 beispielsweise angeklebt sein.

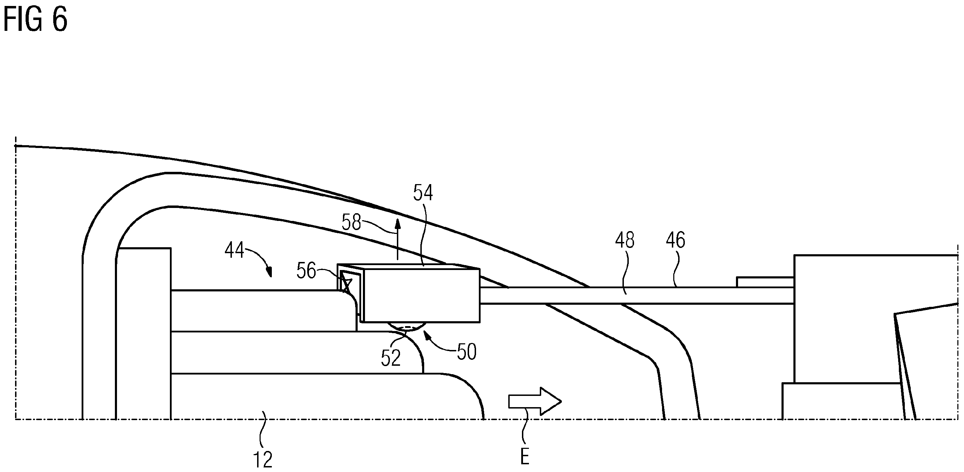

In FIG 6 ist ein Batteriefach 44 gezeigt, in dessen Hohlraum ein Kontaktelement 46 hineinragt. Das Kontaktelement 46 umfasst eine Blattfeder 48, deren in das Batteriefach 44 ragendes Ende einen gekröpften Abschnitt 50 mit einem Kontaktbereich 52 aufweist. Der gekröpfte Abschnitt 50 ist mit einem elektrisch isolierenden Material umspritzt, welches hierdurch einen formschlüssig mit dem gekröpften Abschnitt 50 verbundenen Aufsatz 54 bildet. Um eine Batterie 12 in das Batteriefach 44 einzuführen, muss die Batterie 12 entlang einer Einschubrichtung E in das Batteriefach 44 eingeführt werden. Während des Einführens kommt die Batterie 12 mit einer bezüglich Einschubrichtung E schräg angeordneten Anlagefläche 56 des Aufsatzes 54 in Anlage. Hierdurch wird der gekröpfte Abschnitt 50 mit dem Kontaktbereich 52 in eine Auslenkrichtung 58 ausgelenkt, so dass das Kontaktelement 46 gebogen wird und die Batterie 12 unter dem Kontaktelement 46 hindurchgleiten kann. Da die Blattfeder 48 flexibel ist, wird hierbei der Kontaktbereich 52 gegen die Batterie 12 gedrückt.

Eine Neigung der bezüglich der Einschubrichtung schräg angeordneten Anlageflächen 24, 56 kann zwischen 10° und 80°, bevorzugt zwischen 30° und 60°, betragen.

Durch die Beispiele ist gezeigt, wie durch Bereitstellen einer Wandung aus einem Kunststoff an einem Kontaktelement, welche bezüglich einer Einschubrichtung einer Batterie schräg ausgerichtet ist, in einem Batteriefach einer Hörvorrichtung gleichzeitig zwei Funktionen bereitgestellt werden können: Zum einen ist wirksam ein Kurzschluss während des Einschiebens einer Batterie verhindert. Zum anderen kann eine durch das Einschieben auf das Kontaktelement wirkende Einschubkraft günstig dahingehend umgelenkt werden, dass in dem Kontaktelement eine Vorspannung erzeugt wird, die zum Ausüben einer Anpresskraft eines Kontaktbereichs des Kontaktelements an die Batterie genutzt werden kann.

## Patentansprüche

1. Hörvorrichtung mit einem Batteriefach (10, 44), in welches eine Batterie (12) entlang einer Einführrichtung (E) einführbar und in welchem ein zum elektrischen Kontaktieren der Batterie (12) ausgelegtes Kontaktelement (14, 46) angeordnet ist, wobei durch Einführen der Batterie (12) ein Kontaktbereich (18, 52) des Kontaktelements (14, 46) gegen eine Federkraft (F) auslenkbar ist und der Kontaktbereich (18, 52) hierdurch bei vollständig eingeführter Batterie (12) gegen selbige drückt, wobei das Kontaktelement (14, 46) eine aus einem elektrisch isolierenden Material gebildete Anlageeinrichtung (L, 34, 40, 54) mit einer bezüglich der Einführrichtung (E) schräg angeordneten Oberfläche (24, 56) aufweist, mit welcher die Batterie (12) beim Auslenken des Kontaktbereichs (18, 52) in Anlage ist,
**dadurch gekennzeichnet, dass**
das Kontaktelement (14, 46) derart ausgestaltet und in dem Batteriefach (10, 44) angeordnet ist, dass es bei leerem Batteriefach (10, 44) eine Ruhelage aufweist, in welcher der Kontaktbereich (18, 52) des Kontaktelements (14, 46) in den von der Batterie (12) einzunehmenden Raum durch die Federkraft (F) gehalten hineinragt.

2. Hörvorrichtung nach Anspruch 1, **dadurch gekennzeichnet, dass** das Kontaktelement (14, 46) einen gekröpften Bereich (22, 50) aufweist, welcher die Anlageeinrichtung (L, 34, 40, 54) und/oder den Kontaktbereich (18, 52) aufweist.

3. Hörvorrichtung nach Anspruch 1 oder 2, **dadurch gekennzeichnet, dass** die Anlageeinrichtung (34) eine Platte (34) umfasst, welche an einem elektrischen Leitelement des Kontaktarms (14) befestigt ist.

4. Hörvorrichtung nach Anspruch 1 oder 2, **dadurch gekennzeichnet, dass** die Anlageeinrichtung (L) einen Lack (L) umfasst, welcher auf einer bezüglich der Einführrichtung (E) schräg angeordneten Oberfläche (24) eines elektrisch leitenden Bereichs (22) der Kontakteinrichtung (14) angeordnet ist.

5. Hörvorrichtung nach Anspruch 1 oder 2, **dadurch gekennzeichnet, dass** die Anlageeinrichtung (54) zumindest teilweise durch Umspritzen eines die Anlageeinrichtung (54) tragenden Abschnitts (50) des Kontaktelements (46) mit dem elektrisch isolierenden Material gebildet ist.

6. Hörvorrichtung nach Anspruch 1 oder 2, **dadurch gekennzeichnet, dass** die Anlageeinrichtung eine Kappe umfasst, welche auf ein elektrisches Leitelement des Kontaktelements aufgesetzt ist.

7. Hörvorrichtung nach Anspruch 1 oder 2, **dadurch gekennzeichnet, dass** die Anlageeinrichtung (40) einen aus dem elektrisch isolierenden Material gebildeten Körper (40) umfasst, welcher einen keilförmigen Bereich (42) aufweist.

8. Hörvorrichtung nach einem der vorhergehenden Ansprüche, **dadurch gekennzeichnet, dass** zumindest ein Teil (26, 32, 38, 48) des Kontaktelements (14, 46) als Blattfeder ausgestaltet ist.

9. Hörvorrichtung nach einem der vorhergehenden Ansprüche, **dadurch gekennzeichnet, dass** das elektrisch isolierende Material Polyoxymethylen umfasst.

## Claims

1. Hearing device with a battery compartment (10, 44) into which a battery (12) is insertable along an insertion direction (E) and in which there is arranged a contact element (14, 46) configured for electrically contacting the battery (12), wherein, by insertion of the battery (12), a contact region (18, 52) of the contact element (14, 46) can deflect counter to a spring force (F), and, when the battery (12) is fully inserted, the contact region (18, 52) in this way presses against the battery, wherein the contact element (14, 46) has an abutment device (L, 34, 40, 54) formed from an electrically insulating material and having a surface (24, 56) arranged obliquely with respect to the insertion direction (E), with which surface (24, 56) the battery (12) is in abutment upon deflection of the contact region (18, 52),
**characterized in that**
the contact element (14, 46) is configured in such a way and arranged in the battery compartment (10 44) in such a way that, with the battery compartment (10, 44) empty, it has a rest position in which the contact region (18, 52) of the contact element (14, 46) protrudes, held by the spring force (F), into the space to be occupied by the battery (12).

2. Hearing device according to Claim 1, **characterized in that** the contact element (14, 46) has an angled region (22, 50), which has the abutment device (L, 34, 40, 54) and/or the contact region (18, 52).

3. Hearing device according to Claim 1 or 2, **characterized in that** the abutment device (34) comprises a plate (34), which is secured on an electrical conductive element of the contact arm (14) .

4. Hearing device according to Claim 1 or 2, **characterized in that** the abutment device (L) has a lacquer (L) which is arranged on a surface (24) of an electrically conductive region (22) of the contact device (14), said surface (24) being arranged obliquely with respect to the insertion direction (E).

5. Hearing device according to Claim 1 or 2, **characterized in that** the abutment device (54) is formed at least partially by injecting the electrically insulating material around a section (50) of the contact element (46) supporting the abutment device (54).

6. Hearing device according to Claim 1 or 2, **characterized in that** the abutment device comprises a cap, which is placed onto an electrical conductive element of the contact element.

7. Hearing device according to Claim 1 or 2, **characterized in that** the abutment device (40) comprises a body (40) which is formed from the electrically insulating material and which has a wedge-shaped region (42).

8. Hearing device according to one of the preceding claims, **characterized in that** at least a part (26, 32, 38, 48) of the contact element (14, 46) is configured as a leaf spring.

9. Hearing device according to one of the preceding claims, **characterized in that** the electrically insulating material comprises polyoxymethylene.

## Revendications

1. Dispositif d'audition comprenant un compartiment pour pile (10, 44) dans lequel une pile (12) peut être introduite le long d'une direction d'introduction (E) et dans lequel est disposé un élément de contact (14, 46) conçu pour réaliser le contact électrique avec la pile (12), l'introduction de la pile (12) pouvant produire la déviation d'une zone de contact (18, 52) de l'élément de contact (14, 46) en s'opposant à une force de ressort (F) et la zone de contact (18, 52) exerce ainsi une pression contre la pile (12) lorsque celle-ci est entièrement introduite, l'élément de contact (14, 46) possédant un dispositif d'appui (L, 34, 40, 54) constitué d'un matériau électriquement isolant qui est pourvu d'une surface (24, 56) disposée en biais par rapport à la direction d'introduction (E), avec laquelle la pile (12) est en appui lors de la déviation de la zone de contact (18, 52),
**caractérisé en ce que**
l'élément de contact (14, 46) est configuré et disposé dans le compartiment pour pile (10, 44) de telle sorte que lorsque le compartiment pour pile (10, 44) est vide, il présente une position de repos dans laquelle la zone de contact (18, 52) de l'élément de contact (14, 46) fait saillie en étant maintenu par la force du ressort (F) dans l'espace à occuper par la pile (12).

2. Dispositif d'audition selon la revendication 1, **caractérisé en ce que** l'élément de contact (14, 46) possède une zone coudée (22, 50), laquelle possède le dispositif d'appui (L, 34, 40, 54) et/ou la zone de contact (18, 52).

3. Dispositif d'audition selon la revendication 1 ou 2, **caractérisé en ce que** le dispositif d'appui (34) comporte une plaquette (34) qui est fixée à un élément conducteur d'électricité du bras de contact (14).

4. Dispositif d'audition selon la revendication 1 ou 2, **caractérisé en ce que** le dispositif d'appui (L) comprend un vernis (L) qui est disposé sur une surface (24) disposée en biais par rapport à la direction d'introduction (E) d'une zone (22) électriquement conductrice du dispositif de contact (14).

5. Dispositif d'audition selon la revendication 1 ou 2, **caractérisé en ce que** le dispositif d'appui (54) est formé au moins partiellement par enrobage avec le matériau électriquement isolant d'une portion (50) de l'élément de contact (46) qui porte le dispositif d'appui (54).

6. Dispositif d'audition selon la revendication 1 ou 2, **caractérisé en ce que** le dispositif d'appui comporte un capuchon qui est posé sur un élément conducteur d'électricité de l'élément de contact.

7. Dispositif d'audition selon la revendication 1 ou 2, **caractérisé en ce que** le dispositif d'appui (40) comporte un corps (40) constitué du matériau électriquement isolant, lequel comporte une zone cunéiforme (42).

8. Dispositif d'audition selon l'une des revendications précédentes, **caractérisé en ce qu'**au moins une partie (26, 32, 38, 48) de l'élément de contact (14, 46) est réalisée sous la forme d'un ressort à lames.

9. Dispositif d'audition selon l'une des revendications précédentes, **caractérisé en ce que** le matériau électriquement isolant comprend du polyoxyméthylène.
